(19) Europäisches Patentamt
European Patent Office
Office européen des brevets

(11) EP 3 588 611 A1

(12) EUROPEAN PATENT APPLICATION
published in accordance with Art. 153(4) EPC

(43) Date of publication:
**01.01.2020 Bulletin 2020/01**

(21) Application number: **18757676.4**

(22) Date of filing: **15.02.2018**

(51) Int Cl.:
***H01M 2/16*** *(2006.01)* ***B32B 3/10*** *(2006.01)*
***B32B 27/20*** *(2006.01)* ***B32B 27/32*** *(2006.01)*
***H01M 10/058*** *(2010.01)*

(86) International application number:
**PCT/JP2018/005160**

(87) International publication number:
**WO 2018/155288 (30.08.2018 Gazette 2018/35)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(30) Priority: **23.02.2017 JP 2017031750**

(71) Applicant: **Toray Industries, Inc.**
**Tokyo 103-8666 (JP)**

(72) Inventors:
- **IKOMA, Kei**
  **Nasushiobara-shi**
  **Tochigi 329-2763 (JP)**
- **KAI, Nobuyasu**
  **Otsu-shi**
  **Shiga 520-8558 (JP)**
- **TSUKUDA, Akimitsu**
  **Otsu-shi**
  **Shiga 520-8558 (JP)**

(74) Representative: **Mewburn Ellis LLP**
**City Tower**
**40 Basinghall Street**
**London EC2V 5DE (GB)**

# (54) POROUS FILM, SEPARATOR FOR SECONDARY BATTERIES, AND SECONDARY BATTERY

(57) [Problem] The purpose of the present invention is to provide a separator for secondary batteries, which has high heat resistance, excellent battery characteristics and excellent quality stability, at low cost. [Solution] A porous film which has a porous layer containing inorganic particles and a heat-resistant resin on at least one surface of a porous substrate, and wherein the heat-resistant resin is (A) a resin that has a melting point of 200°C or higher or (B) a resin that has no melting point. This porous film has an area thermal shrinkage of 25% or less at 140°C, while having a variation in light transmittance at a wavelength of 800 nm of 15% or less in the length direction as measured at intervals of 5 m.

EP 3 588 611 A1

## Description

### TECHNICAL FIELD

The present invention relates to a porous film, a separator for secondary batteries, and a secondary battery.

### BACKGROUND ART

Secondary batteries such as lithium ion batteries are widely used for portable digital devices such as smartphones, tablets, mobile phones, laptop PCs, digital cameras, digital video cameras, and portable game consoles; portable apparatuses such as electric tools, electric bikes, and electric assisted bicycles; and automotive applications such as electric vehicles, hybrid vehicles, and plug-in hybrid vehicles.

In general, a lithium ion battery contains a positive electrode formed by laying a positive electrode active material on a positive electrode collector and a negative electrode formed by laying a negative electrode active material on a negative electrode collector, with a secondary battery separator and an electrolyte interposed between them.

A polyolefin based porous base is used in the secondary battery separator. Features required of these secondary battery separators include having a porous structure containing an electrolyte to permit ion migration and having a shutdown property that allows power generation to be stopped in the event of abnormal heat generation in a lithium ion battery by undergoing thermal melting so that the porous structure will be closed to halt the ion migration.

As lithium ion batteries with larger capacities and larger output are developed in recent years, however, secondary battery separators are now required to have dimensional stability at high temperatures and resistance to thermal film breakage in addition to the above features. If abnormal heat generation occurs in a lithium ion battery, the secondary battery separator can shrink to cause short circuits in some portions as a result of further heating of the battery after the actuation of the shutdown property described above. A secondary battery separator can also be broken as a result of heat generation under local pressure that occurs when a lithium ion battery receives an impact. If such film breakage occurs in a secondary battery separator, a short circuit can occur in the battery. Thus, a secondary battery separator is required to have resistance to thermal breakage at high temperatures in addition to the shutdown property.

On the other hand, a lithium ion battery is also required to have excellent battery characteristics to permit larger output, longer life, and larger capacity, making it necessary to develop a secondary battery separator having good battery characteristics without undergoing a decline in battery characteristics that may occur as a result of developing dimensional stability at high temperatures and resistance to thermal film breakage.

To meet these requirements, Patent document 1 proposes a secondary battery separator that includes a polyolefin based porous film coated with a porous layer containing inorganic particles to ensure a reduction in the degree of heat shrinkage. In addition, Patent document 2 proposes a secondary battery separator having high heat resistance and a high short-circuiting temperature that is produced by coating a porous base with a heat resistant nitrogen-containing aromatic polymer and ceramic powder.

### PRIOR ART DOCUMENTS

### PATENT DOCUMENTS

Patent document 1: Japanese Patent No. 5183435
Patent document 2: Japanese Unexamined Patent Publication (Kokai) No. 2016-130027

### SUMMARY OF INVENTION

### PROBLEMS TO BE SOLVED BY THE INVENTION

However, although the separator in Patent document 1 contains inorganic particles to serve for reducing the degree of heat shrinkage that occurs up to the shutdown temperature, a large degree of heat shrinkage will occur when it reaches a high temperature region after shutdown, making it impossible to ensure adequate dimensional stability and resistance to thermal film breakage at high temperatures. In Patent document 2, on the other hand, the separator is covered with a heat resistant nitrogen-containing aromatic polymer and accordingly, the degree of heat shrinkage will be small when it reaches a high temperature region after shutdown. However, it results in a large variation in the hole structures and a large variation in the battery characteristics.

Thus, in view of the above problem, an object of the present invention to provide, at low cost, a porous film that

suffers only a small degree of heat shrinkage when it reaches a high temperature region after shutdown and that has good battery characteristics with a reduced variation in the hole structures in the length direction.

MEANS OF SOLVING THE PROBLEMS

Accordingly, the present inventors made intensive studies with the aim of providing, at low cost, a porous film that suffers only a small degree of heat shrinkage when it reaches a high temperature region after shutdown and that has good battery characteristics with a reduced variation in the hole structures in the length direction. As a result, they found that the use of heat resistant resin and inorganic particles serves to provide, at low cost, a porous film that suffers only a small degree of heat shrinkage when it reaches a high temperature region after shutdown and that has good battery characteristics with a reduced variation in the hole structures in the length direction.
To solve the above problems, the porous film according to the present invention is configured as described below.

(1) A porous film including a porous base having a porous layer containing inorganic particles and heat resistant resin at least on one side thereof, the heat resistant resin being either a resin (A) having a melting point of 200°C or more or a resin (B) having no melting point, and characterized in that the degree of area heat shrinkage at 140°C is 25% or less and that the variation in light transmittance at a wavelength of 800 nm measured at intervals of 5 m in the length direction is 15% or less.
(2) A porous film as set forth in (1), wherein the existence of the porous layer serves to increase the puncture strength by 30 gf or more.
(3) A porous film as set forth in either (1) or (2), wherein the inorganic particles account for 60 mass% or more and 95 mass% or less.
(4) A porous film as set forth in any one of (1) to (3), wherein the total thickness of the porous layers is 1 μm or more and 6 μm or less.
(5) A porous film as set forth in any one of (1) to (4), wherein the difference between the shutdown temperature and the meltdown temperature (shutdown temperature - meltdown temperature) is 70°C or more.
(6) A secondary battery separator including a porous film as set forth in any one of (1) to (5).
(7) A secondary battery including a secondary battery separator as set forth in (6).
(8) A secondary battery as set forth in (6), wherein the volume energy density is 500 Wh/L.

ADVANTAGEOUS EFFECTS OF THE INVENTION

According to the present invention, the use of heat resistant resin and inorganic particles serves to provide, at low cost, a porous film that suffers only a small degree of heat shrinkage when it reaches a high temperature region after shutdown and that has good battery characteristics with a reduced variation in the hole structures in the length direction. Furthermore, the use of the secondary battery separator according to the present invention makes it possible to provide a secondary battery characterized by a high dimensional stability at high temperatures and large resistance to thermal film breakage as well as a high capacity, high output, long life, and low cost.

DESCRIPTION OF PREFERRED EMBODIMENTS

The porous film according to the present invention is one that includes a porous base having a porous layer containing inorganic particles and heat resistant resin at least on one side thereof, the heat resistant resin being either a resin (A) having a melting point of 200°C or more or a resin (B) having no melting point, and characterized in that the degree of area heat shrinkage at 140°C is 25% or less and that the variation in light transmittance at a wavelength of 800 nm measured at intervals of 5 m in the length direction is 15% or less. The invention is described in more detail below.

[Porous layer]

(Heat resistant resin)

A resin referred to here as heat resistant resin is either a resin (A) having a melting point of 200°C or more or a resin (B) having no melting point. The melting point can be determined according to JIS K7121 (2012). A resin (A) having a melting point of 200°C or more is one such that after first being heated and cooled in a differential scanning calorimeter (DSC) according to JIS K7121 (2012), the temperature at the top of the endothermic peak identified during the second heating step is 200°C or more whereas a resin (B) having no melting point is one that shows no such peak top in the measuring temperature range of 20°C to 230°C.
Examples of such resins include polyethylene terephthalate, polysulfone, polyethersulfone, polyphenylene

sulfide, polyallylate, polyetherimide, polyether ether ketone, polyamide, polyimide, polyamide-imide, fluorine resin, cellulose, and derivatives thereof. Here, a plurality of these materials may be used in the form of a mixture, laminate, etc. Particularly preferred ones include aromatic polyamide, aromatic polyimide, and aromatic polyamide-imide, of which aromatic polyamide is the most preferable.

Examples of the aromatic polyamide include meta-oriented aromatic polyamide and para-oriented aromatic polyamide. For the present invention, either may be used, but para-oriented aromatic polyamide is preferable because the use of such a porous film serves to provide a secondary battery separator that ensures good battery characteristics and a high degree of heat shrinkage.

Aromatic polyamide polymers that can be used suitably for the present invention have repeating units as represented by the chemical formula (1) and/or chemical formula (2) given below.

Chemical formula (1):

[Chemical formula 1]

$$\{\mathbf{NH\text{-}Ar_1\text{-}NHCO\text{-}Ar_2\text{-}CO}\} \qquad (1)$$

Chemical formula (2):

[Chemical formula 2]

$$\{NH\text{-}Ar_3\text{-}CO\} \qquad (2)$$

Here, $Ar^1$, $Ar^2$, and $Ar^3$ may be, for example, ones selected from the groups represented by the chemical formulae (3) to (7) given below.

Chemical formulae (3) to (7):

[Chemical formula 3]

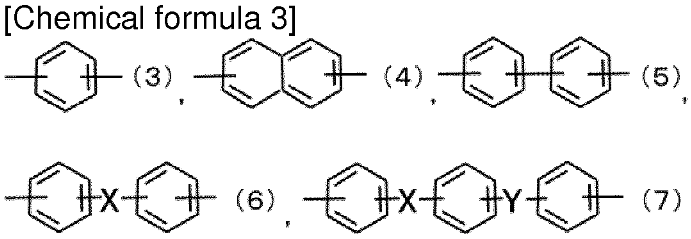

(3), (4), (5), (6), (7)

Examples of X and Y include, but not limited to, -O-, -CO-, $-CO_2-$, $-SO_2-$, $-CH_2-$, -S-, and $-C(CH_3)_2-$.

Furthermore, part of the hydrogen atoms on the aromatic rings in $Ar_1$ to $Ar_3$ may be substituted by substituent groups including halogen groups such as fluorine, bromine, and chlorine, and others such as nitro group, cyano group, alkyl group, and alkoxy group. In particular, the existence of electron-withdrawing substituent groups such as halogen group, nitro group, and cyano group is preferable because it ensures a high resistance to electrochemical oxidation and serves for the production of a separator in which the positive electrode is resistant to deterioration such as oxidization. Among other substituent groups, halogen groups are more preferable, and the chlorine atom is the most preferable.

The bonds on $Ar_1$ to $Ar_3$ may be ortho-oriented, meta-oriented, or para-oriented, but it is preferable that rings having para-orientation account for 50 mol% or more of all aromatic rings. The proportion is more preferably 100 mol%. Here, para-orientation means the state where the divalent bonds forming the backbone chain in an aromatic ring are located coaxially or in parallel.

Furthermore, the logarithmic viscosity (ηinh), which is an indicator of the molecular weight, is preferably 2.0 dl/g or more. A logarithmic viscosity (ηinh) controlled at 2.0 dl/g or more, more preferably 2.5 dl/g or more, means relatively long molecular chains to allow inorganic particles to be captured sufficiently, thereby serving to produce a porous layer having sufficiently developed characteristics. The characteristics of a porous layer can also be enhanced by decreasing the proportion of the heat resistant resin in the porous layer and accordingly, this serves for easy balancing among various battery characteristics and reduction in costs. On the other hand, the logarithmic viscosity (ηinh) is preferably 7.0 dl/g or less from the viewpoint of the dispersibility of inorganic particles in the coating solution and the productivity.

(Inorganic particles)

Specific examples of the inorganic particles include inorganic oxide particles such as aluminum oxide, boehmite, silica, titanium oxide, zirconium oxide, iron oxide, and magnesium oxide; inorganic nitride particles such as aluminum nitride and silicon nitride; and insoluble ion crystal particles such as calcium fluoride, barium fluoride, and barium sulfate.

Of these, one type of particles may be used singly, or two or more types of particles may be used as a mixture.

It is preferable that the inorganic particles to use have a primary average particle diameter of 0.10 μm or more and 5.0 μm or less. It is more preferably 0.20 μm or more and 3.0 μm or less, and still more preferably 0.30 μm or more and 1.0 μm or less. If it is less than 0.10 μm, the porous layer will be too dense in some cases, possibly leading to a high air permeability. Furthermore, the pore size will be small and accordingly the electrolyte impregnatability will be low in some cases, possibly leading to an influence on the productivity. If it is more than 5.0 μm, a sufficient degree of heat shrinkage will not be realized or the porous layer will be too thick in some cases, possibly leading to deterioration in battery characteristics.

The particles to use may have any appropriate shape such as spherical, plate-like, needle-like, rod-like, and elliptic. In particular, it is preferable for them to be spherical from the viewpoint of surface modification, dispersibility, and coatability.

(Porous layer)

For the present invention, a porous layer is one having pores inside. Here, there are no specific limitations on the components or the production method used for the porous layer, but as an example, a porous layer containing an aromatic polyamide resin as heat resistant resin component will be described below.

Diamine and acid dichloride are used as starting materials to produce aromatic polyamide resin by a generally known production method such as solution polymerization and it is dispersed in a solvent together with inorganic particles to prepare a coating solution. Here, solvents useful for the dispersion include aprotic organic polar solvents such as N-methyl-2-pyrrolidone, N,N-dimethyl acetamide, dimethyl formamide, and dimethyl sulfoxide. Of these, N-methyl-2-pyrrolidone is particularly preferable from the viewpoint of the formation of a porous structure in a subsequent step.

To further increase the porosity, a poor solvent for the aromatic polyamide resin may be added. There are no specific limitations on the poor solvent as long as it is a liquid that will not solvate easily with the aromatic polyamide resin, and specific examples include water, alcohol based solvents, and mixed solvents thereof. In particular, the addition of water is preferable, and it is preferable for the water to account for 500 parts by mass or less relative to 100 parts by mass of the aromatic polyamide resin. If more than 500 parts by mass of water is added, problems such as the coagulation of the aromatic polyamide resin in the coating solution can occur in some cases, possibly leading to insufficient stability of the coating material.

In addition to the aromatic polyamide resin and inorganic particles, the coating solution may additionally contain organic resins such as fluorine resin, acrylic resin, olefin resin, and polyvinyl pyrrolidone in order to increase the adhesiveness to the electrode. Examples of the fluorine resin to add include homopolymeric ones such as polyvinylidene fluoride, polytetrafluoroethylene, polyvinyl fluoride, and polychlorotrifluoro ethylene, and copolymers such as ethylene-tetrafluoroethylene polymer and ethylene-chlorotrifluoroethylene polymer. The examples also include copolymers of homopolymeric resins with tetrafluoroethylene, hexafluoropropylene, trifluoroethylene, etc. Of these fluorine resins, polyvinylidene fluoride based resins, such as a vinylidene fluoride - hexafluoropropylene copolymer in particular, are used suitably from the viewpoint of having electric stability and oxidation resistance. Furthermore, the coating solution may contain a dispersing agent, viscosity improver, stabilization agent, antifoam agent, leveling agent, etc., as required.

There are no specific limitations on the order of the coating solution preparation steps, but from the viewpoint of uniform dispersion of particles and uniform particle diameter distribution of inorganic particles in the coating solution, it is preferable to mix and dissolve an aromatic polyamide resin in an aprotic organic polar solvent, mix the resulting solution with a dispersion liquid containing dispersed inorganic particles and aprotic organic polar solvent, and, if required, add other organic resins, additives, etc., to prepare a coating solution.

There are no specific limitations on the method to use for achieving dispersion in the coating solution, but from the viewpoint of uniform dispersion of particles and uniform particle diameter distribution of inorganic particles in the coating solution, it is preferable that primary dispersion is achieved first by using stirring machines such as homogenizer, ultrasonic homogenizer, high pressure homogenizer, ultrasonic equipment, and paint shaker, followed by secondary dispersion by using a ball mill, bead mill, sand mill, roll mill, etc. For the secondary dispersion in particular, it is preferable to use a bead mill to achieve dispersion from the viewpoint of uniform particle diameter distribution of the inorganic particles in the coating solution, and it is preferable that the diameter of the beads used in the bead mill is 0.1 to 1 mm and that the beads are of such a material as aluminum oxide, zirconium oxide, and zirconia-reinforced alumina. Furthermore, the dispersion operation using the bead mill is preferably performed in a plurality of steps and the circumferential speed is preferably changed stepwise from the viewpoint of uniform particle diameter distribution of the inorganic particles in the coating solution.

The uniformity of the particle diameter distribution of the inorganic particles in the coating solution can be calculated as (particle size D90 - particle size D10) / particle size D50 × 100. The uniformity of the particle diameter distribution of the inorganic particles in the coating solution is preferably 100 or less, and more preferably 70 or less.

Then, a porous base is coated with the resulting coating solution, immersed in a water tank, and dried to form

a porous coat layer. The coating may be achieved by a generally known method. Useful examples include dip coating, gravure coating, slit die coating, knife coating, comma coating, kiss coating, roll coating, bar coating, spray coating, immersed coating, spin coating, screen printing, ink jet printing, pad printing, and other printing techniques. There are no limitations on them and an appropriate method may be selected to meet preferred conditions for the fluorine resin, organic resin, inorganic particles, binder, dispersing agent, leveling agent, solvent, base material, etc. to use. To increase the coatability, furthermore, the surface of the porous base to coat may be subjected to surface treatment such as, for example, corona treatment and plasma treatment.

In the porous layer, the inorganic particles preferably accounts for 60 mass% or more and less than 95 mass%, more preferably 70 mass% or more and less than 95 mass%, of the entire porous layer, which accounts for 100 mass%. The content is more preferably 75 mass% or more and less than 95 mass%. In the case where a plurality of porous layers are included, each of the porous layers should meet the requirements.

If the content of the inorganic particles in the porous layer is more than 95 mass%, a sufficiently large degree of heat shrinkage cannot be realized in some cases. If it is less than 60 mass%, the content of the aromatic polyamide resin will be too large and sufficiently good porous structures will not be formed in some cases, possibly leading to a large resistance and deterioration in battery characteristics. In addition, there will occur cost-related disadvantages in some cases. In the case where there exist a plurality of porous layers, it is preferable that the inorganic particles account for 60 mass% or more and less than 95 mass% in at least one of the individual layers and it is also preferable that the inorganic particles account for 60 mass% or more and less than 95 mass% in all porous layers.

The porous layers preferably have a total thickness of 1 μm or more and 6 μm or less. It is more preferably 1.5 μm or more and 5 μm or less. It is still more preferably 2 μm or more and 4 μm or less. The "total thickness of the porous layers" as referred to in the case of a porous base having a porous layer on one side means the thickness of that porous layer whereas in the case of a porous base having porous layers on both sides, it means the sum of the thicknesses of the two porous layers. If the total thickness of the porous layers is less than 1 μm, a sufficiently large resistance to thermal breakage cannot be realized in some cases. If it is more than 6 μm, on the other hand, sufficiently good porous structures will not be formed in some cases, possibly leading to deterioration in battery characteristics. In addition, there will occur cost-related disadvantages in some cases.

The existence of the porous layer preferably serves to increase the puncture strength by 30 gf or more. The increase is more preferably 40 gf or more. Here, the increase in puncture strength resulting from the existence of the porous layer is calculated by subtracting the puncture strength of the porous base itself from that of the porous film provided with the porous layer and it represents the increase in puncture strength resulting from the addition of the porous layer. If the increase in puncture strength resulting from the existence of the porous layer is less than 30 gf, the porous layer will be low in strength in some cases, leading to a secondary battery that can suffer from short circuits.

[Porous base]

Examples of the porous base to use for the present invention include porous films having pores inside, nonwoven fabrics, and porous film sheets of fibrous materials. With respect to the primary constituent, the porous base is preferably composed mainly of a resin that has electrical insulating properties, electric stability, and stability in electrolytes. In order to allow the resin to have a shutdown function, it is preferably a thermoplastic resin, and more preferably a thermoplastic resin having a melting point of 200°C or less. This shutdown function serves, in the event of abnormal heat generation in a lithium ion battery, in such a manner that the resin is melted by heat so that the porous structure will be closed to halt the ion migration, thereby stopping the power generation.

The thermoplastic resin may be, for example, polyolefin, and the porous base is preferably a porous base containing polyolefin. With respect to the porous base containing polyolefin, it is more preferable that the porous base containing polyolefin has a melting point of 200°C or less. Specific examples of the polyolefin include polyethylene, polypropylene, copolymers thereof, and mixtures prepared by combination thereof, which may be in the form of, for example, a monolayer porous base containing 90 mass% or more of polyethylene or a multilayered porous base formed of polyethylene and polypropylene.

Available production methods for porous bases include, for example, a method in which a polyolefin based resin is processed into a sheet, which is then stretched to make it porous, and a method in which a polyolefin based resin is dissolved in a solvent such as liquid paraffin and processed into a sheet, followed by removing the solvent to make it porous.

It is preferable for the porous base to have a thickness of 3 μm or more and 50 μm or less, and more preferably 5 μm or more and 30 μm or less. If the porous base has a thickness of more than 50 μm, the porous base will have a large internal resistance in some cases. On the other hand, a porous base having a thickness of less than 3 μm will be difficult to produce and fail to have sufficient mechanical characteristics in some cases.

It is preferable for the porous base to have an air permeability of 50 seconds/100 $cm^3$ or more and 1,000 seconds/100 $cm^3$ or less. It is still more preferably 50 seconds/100 $cm^3$ or more and 500 seconds/100 $cm^3$ or less. If

the air permeability is more than 1,000 seconds/100 $cm^3$, sufficient ion migration will not be realized in some cases, possibly leading to deterioration in battery characteristics. If it is less than 50 seconds/100 $cm^3$, sufficient mechanical characteristics will not be realized in some cases.

[Porous film]

The porous film according to the present invention is one characterized in that the degree of area heat shrinkage at 140°C is 25% or less and that the variation in light transmittance at a wavelength of 800 nm measured at intervals of 5 m in the length direction is 15% or less.

For the porous film, the variation in light transmittance at a wavelength of 800 nm measured at intervals of 5 m in the length direction is 15% or less. The variation in light transmittance measured at a wavelength of 800 nm serves to estimate the variation in the hole structures in the porous film. In the case where the variation in light transmittance at a wavelength of 800 nm in the length direction is more than 15%, when secondary batteries are produced using the porous film as secondary battery separator, variation in battery characteristics can occur among the secondary batteries in some cases. From the viewpoint of the variation in battery characteristics that can occur among the secondary batteries, the variation in light transmittance at a wavelength of 800 nm in the length direction is preferably less than 10%, and more preferably less than 8%. The variation in light transmittance should be as small as possible, but substantially the lower limit is 0.01%.

For the porous film, the degree of area heat shrinkage at 140°C is 25% or less. The degree of area heat shrinkage at 140°C represents the shrinkage of the porous film at high temperatures above the shutdown temperature of the porous base. If the degree of area heat shrinkage is more than 25%, a large shrinkage will occur at the time of shutdown and the size of the porous film will become smaller than that of the electrode in some cases, possibly leading to a short circuit and heat generation in the secondary battery. From the viewpoint of enhancing the dimensional stability and resistance to thermal film breakage of the secondary battery at high temperatures, the degree of area heat shrinkage is preferably 20% or less, and more preferably 15% or less. The degree of area heat shrinkage is preferably as small as possible, and the expansion after heating can cause a decrease in thickness to cause short circuits, thus giving rise to a substantial lower limit of 0.01%. Here, for the determination of the degree of area heat shrinkage of a heat-treated porous film, the shortest size of a specimen in the length direction and that in the width direction are measured, and the degree of shrinkage is calculated.

It is preferable for the porous film to have an air permeability of 50 seconds/100 $cm^3$ or more and 1,000 seconds/100 $cm^3$ or less. It is more preferably 50 seconds/100 $cm^3$ or more and 500 seconds/100 $cm^3$ or less. If the air permeability is more than 1,000 seconds/100 $cm^3$, sufficient ion migration will not be realized in some cases, possibly leading to deterioration in battery characteristics. If it is less than 50 seconds/100 $cm^3$, sufficient mechanical characteristics will not be realized in some cases.

For the porous film, the difference between the shutdown temperature and the meltdown temperature (shutdown temperature - meltdown temperature) is preferably 70°C or more. The shutdown temperature is a temperature at which, in the event of abnormal heat generation in a lithium ion battery, the film is melted by heat so that the porous structure will be closed to halt the ion migration, thereby stopping the power generation, whereas the meltdown temperature is a temperature at which, in the event of heat generation above the shutdown temperature, the porous film is melted to cause short circuits in the battery. For the shutdown temperature and meltdown temperature to use for the present invention, the air permeability of a specimen is measured while heating it according to the method described in Examples, and those temperatures can be evaluated based on the changes in air permeability. Such a temperature difference as described above can be realized either by decreasing the shutdown temperature or increasing the meltdown temperature. If the difference between the shutdown temperature and the meltdown temperature is 70°C or more, more preferably 100°C or more, there will be a large temperature difference between the closure of the porous structure and the subsequent complete melting, thereby serving for prevention of short circuits and heat generation in the battery.

[Secondary battery]

The porous film according to the present invention can be used suitably for the separators of secondary batteries such as lithium ion battery. A lithium ion battery contains a positive electrode formed by laying a positive electrode active material on a positive electrode collector and a negative electrode formed by laying a negative electrode active material on a negative electrode collector, with a secondary battery separator and an electrolyte interposed between them.

In the positive electrode, a positive electrode material containing an active material, binder resin, and conductive assistant is laid over a collector, and the active material is, for example, a lithium-containing transition metal oxide such as $LiCoO_2$, $LiNiO_2$, and $Li(NiCoMn)O_2$ that has a layer-like structure, a spinel type manganese oxide such as $LiMn_2O_4$, or an iron based compound such as $LiFePO_4$. The binder resin may be a highly oxidation resistant resin. Specific examples include fluorine resin, acrylic resin, and styrene-butadiene resin. As the conductive assistant, carbon materials

such as carbon black and graphite are used. The collector is preferably in the form of metal foil, and in particular, aluminum foil is used widely.

In the negative electrode, a negative electrode material containing an active material and binder resin is laid over a collector, and the active material is, for example, a carbon material such as artificial graphite, natural graphite, hard carbon, and soft carbon, a lithium alloy based material of tin, silicon, etc., a metal material such as Li, or lithium titanate ($Li_4Ti_5O_{12}$). Fluorine resin, acrylic resin, or styrene-butadiene resin is used as the binder resin. The collector is preferably in the form of metal foil, and in particular, copper foil is used widely.

The electrolyte gives a space in which ions migrate between the positive electrode and the negative electrode in the secondary battery, and it consists mainly of an electrolyte substance dissolved in an organic solvent. Examples of the electrolyte substance include $LiPF_6$, $LiBF_4$, and $LiClO_4$, of which $LiPF_6$ is preferred from the viewpoint of the solubility in organic solvents and the ion conductance. Examples of the organic solvent include ethylene carbonate, propylene carbonate, fluoroethylene carbonate, dimethyl carbonate, diethyl carbonate, ethylmethyl carbonate, γ-butyrolactone, and sulfolane, and these organic solvents may be used as a mixture of two or more thereof.

As a method to produce a secondary battery, first an active material and a conductive assistant are dispersed in a binder solution to prepare a coating solution for electrode formation and this coating solution is spread over a collector, followed by drying to remove the solvent to provide a positive electrode or a negative electrode. After the drying step, the coat film preferably has a film thickness of 50 μm or more and 500 μm or less. A secondary battery separator is sandwiched between the resulting positive electrode and negative electrode in such a manner that it comes in contact with the active material layer of each electrode and then they are enclosed in a covering material such as aluminum laminate film. Subsequently, an electrolyte is injected, and a negative electrode lead and safety valves are attached, followed by sealing the covering material. The secondary battery thus obtained has both a large resistance to thermal breakage and good battery characteristics, and its production can be carried out at low cost.

In addition, it is preferable for the secondary battery according to the present invention to have a volume energy density of 500 Wh/L or more, more preferably 1,000 Wh/L or more. A volume energy density of 500 Wh/L or more is preferable because it permits the production of small secondary batteries that can be applied suitably to various mobile devices such as smart phones and laptop computers.

EXAMPLES

This invention is more specifically explained below with reference to Examples, but it is not limited thereby. The measuring methods used in these Examples are described below.

[Measuring methods]

(1) Variation in light transmittance

A sample with a size of 50 mm × 50 mm was cut out of the porous film prepared. The central region of the sample obtained was observed by an ultraviolet-visible spectrophotometer (UV-2450, manufactured by Shimadzu Corporation) to measure the light transmittance at an incidence angle of 0°. Measurements were taken in the wavelength range of 200 to 900 nm under the conditions of a resolution width of 0.1 nm, double beam photometry, single monochromator used as spectrometer, and a scanning speed of 600 nm/min, to determine the light transmittance at 800 nm. A piece of clear glass was attached to the rear side of the sample and light was applied through the glass for taking a measurement. A total of 21 such samples were cut out at intervals of 5 m in the length direction of the film (i.e., to cover a 100 m portion in the length direction) and measures were taken in the same way. Of all the light transmittance measures taken from the 21 samples, the largest one and the smallest one were adopted as the maximum light transmittance and the minimum light transmittance, respectively, and the measurements were averaged over the 21 samples to give the average light transmittance. The variation in light transmittance was calculated as (maximum light transmittance - minimum light transmittance) / average light transmittance × 100.

(2) Degree of area heat shrinkage

A piece with a size of 50 mm × 50 mm was cut out to prepare a sample. The size of each side of the sample obtained was measured in the length direction and the width direction and the size in the length direction and the size in the width direction were defined as $L_{MD1}$ (=50) (mm) and $L_{TD1}$ (=50) (mm), respectively. The sample was left in a hot air oven heated at 140°C for 60 minutes to perform heat treatment and it was left to stand to cool after the heat treatment. The shortest size of the specimen obtained in the length direction and that in the width direction were measured, and the size in the length direction and the size in the width direction were defined as $L_{MD2}$ (mm) and $L_{TD2}$ (mm), respectively. The degree of shrinkage was calculated according to the equation given below.

$$\text{Degree of area heat shrinkage (\%)} = (L_{MD1} \times L_{TD1} - L_{MD2} \times L_{TD2}) / L_{MD1} \times L_{TD1} \times 100$$

Measurements were taken from five samples and averaged.

(3) Thickness of porous layer

A cross section of a sample was cut out by a microtome and the cross section was observed by field emission type scanning electron microscopy. In the region observed, a point located at the highest position from the interface with the porous base was identified and its height was measured as the thickness of the porous layer. Five regions were selected appropriately in a sample with a size of 100 mm × 100 mm and measurements taken from them were averaged.

(4) Increase in puncture strength

Using a compression testing machine (KES-G5, manufactured by Kato Tech Co., Ltd.) equipped with a needle having a spherical end (curvature radius R = 0.5 mm) and a diameter of 1 mm, measurements were taken at a speed of 2 mm/second and a temperature of 23°C. The load on the film was read at the time when the film was broken and it was divided by the thickness (mm) of the sample measured before the test to give the puncture strength (N/mm). Measurements were taken from five samples and their average was used for evaluation. Next, 100 parts by mass of the sample used was immersed in 100 parts by mass of concentrated sulfuric acid at room temperature for 24 hours, washed in flowing water, and dried to remove the porous layer from the sample and the puncture strength of the porous base alone was measured in the same way. The puncture strength of the porous base alone was subtracted from the puncture strength of the stack including the porous layer to calculate the increase in the puncture strength brought about by the existence of the porous layer.

(5) Air permeability

Measurements were taken by an Oken type air permeation resistance measuring device (EGO-1 T, manufactured by Asahi Seiko Co., Ltd.) according to JIS P8117 (1998).

(6) Melting point

Measurements were taken according to JIS K7121 (2012). Specifically, the melting point is determined by first heating and cooling a specimen in a differential scanning calorimeter (DSC) and heating it for the second time while measuring the temperature at the top of the endothermic peak. The resin was regarded as having no melting point when it showed no such peak top in the measuring temperature range of 20°C to 230°C. Here, three measurements were taken, and when the resin had a melting point, the average of the three measurements was adopted as the melting point.

(7) Production of battery

To produce a positive electrode sheet, 92 parts by mass of $Li(Ni_{5/10}Mn_{2/10}Co_{3/10})O_2$ as positive electrode active material, 2.5 parts by mass each of acetylene black and graphite as positive electrode conductive assistants, and 3 parts by mass of polyvinylidene fluoride as positive electrode binder were dispersed in N-methyl-2-pyrrolidone using a planetary mixer to prepare a positive electrode slurry, and aluminum foil was coated with it, dried, and rolled (coating metsuke: 9.5 mg/cm$^2$).

This positive electrode sheet was cut to provide a 40 mm × 40 mm specimen. This step was carried out in such a manner that a 5 mm × 5 mm tab adhering portion for collector free of an active material layer protruded out of the active material face. An aluminum tab with a width of 5 mm and a thickness of 0.1 mm was attached to the tab adhering portion by ultrasonic welding.

To produce a negative electrode sheet, 98 parts by mass of natural graphite as negative electrode active material, 1 part by mass of carboxymethyl cellulose as viscosity improver, and 1 part by mass of a styrene-butadiene copolymer as negative electrode binder were dispersed in water using a planetary mixer to prepare a negative electrode slurry, and copper foil was coated with it, dried, and rolled (coating metsuke: 5.5 mg/cm$^2$).

This negative electrode sheet was cut to provide a 45 mm × 45 mm specimen. This step was carried out in such a manner that a 5 mm × 5 mm tab adhering portion for collector free of an active material layer protruded out of the active material face. A copper tab of the same size as the positive electrode tab was attached to the tab adhering portion by ultrasonic welding.

Then, the secondary battery separator was cut to provide a 55 mm × 55 mm specimen, and the secondary

battery separator specimen was sandwiched between the positive electrode and negative electrode prepared above in such a manner that the active material layers were separated by the secondary battery separator. In this way, a group of electrodes was prepared in such a manner that all positive electrode coated portions were opposed to the negative electrode coated portions. A positive electrode, negative electrode, and separator as prepared above were wrapped in a 90 mm × 200 mm aluminum laminate film and the long sides of the aluminum laminate film were folded. Then, the long sides of the aluminum laminate film were heat-sealed to form a bag.

A 1:1 (volume ratio) mixed solvent of ethylene carbonate and diethyl carbonate was prepared and a $LiPF_6$ solute was dissolved to a concentration of 1 mole/liter to produce an electrolyte. Then, 1.5 g of the electrolyte was put in the bag of aluminum laminate film and, while performing impregnation under reduced pressure, the short sides of the aluminum laminate film were heat-sealed to provide a laminate type battery.

(8) Charge-discharge cycle characteristics

Test for charge-discharge cycle characteristics of the laminate type battery prepared was carried out by the following procedure and they were evaluated in terms of the discharge capacity retention rate.

<1st to 300th cycle>

One cycle consisted of one charge step and one discharge step, and this charge-discharge cycle was repeated 300 times at 25°C under the charging condition of constant current charging at 2 C and 4.3 V and the discharging condition of constant current discharging at 2 C and 2.7 V.

<Calculation of discharge capacity retention rate>

The discharge capacity retention rate was calculated as (discharge capacity in 300th cycle) / (discharge capacity in 1st cycle) × 100. Ten such laminate type batteries as described above were prepared and the variation in discharge capacity retention rate was calculated as (maximum discharge capacity retention rate - minimum discharge capacity retention rate) / average discharge capacity retention rate × 100. A specimen was rated as × when the variation in discharge capacity retention rate was 20% or more, ○ when it was 10% or more and less than 20%, and ◎when it was less than 10%.

(9) Shutdown temperature and meltdown temperature

The Shutdown temperature and meltdown temperature were determined according to the method disclosed in International Publication WO 2007/052663. According to this method, a porous film specimen is put in atmosphere at 30°C and heated at 5°C/min while measuring the air permeability of the film. The temperature at which the permeability (Oken type) of the porous film exceeds 100,000 seconds/100 $cm^3$ for the first time is defined as the shutdown temperature of the porous film. For the meltdown temperature, on the other hand, when the permeability, after exceeding 100,000 seconds/100 $cm^3$, decreases to below 10 seconds/100 $cm^3$ for the first time, the temperature at that moment is defined as the meltdown temperature of the porous film. Here, the upper limit for measuring the meltdown temperature is 250°C. The air permeation resistance of porous films was measured by an Oken type air permeation resistance measuring device (EGO-1 T, manufactured by Asahi Seiko Co., Ltd.) according to JIS P8117 (2009).

(Example 1)

In dehydrated N-methyl-2-pyrrolidone, 2-chloro-1,4-phenylene diamine and 4,4'-diaminodiphenyl ether were dissolved in amounts corresponding to 85 mol% and 15 mol%, respectively, of the total amount of diamine. To this, as an acid dichloride component, 2-chloroterephthaloyl chloride was added in an amount corresponding to 99 mol% of the total amount of diamine, followed by stirring to polymerize an aromatic polyamide resin. The resulting polymerization reaction solution was neutralized with lithium carbonate in an amount corresponding to 97 mol% of the total amount of acid dichloride, and further neutralized with diethanol amine in an amount corresponding to 15 mol% and triethanol amine in an amount corresponding to 25 mol% to provide an aromatic polyamide resin solution having an aromatic polyamide resin concentration of 10 mass%. The resulting aromatic polyamide resin showed no such peaktop as described above in the measuring temperature range of -20°C to 230°C and regarded as a resin having no melting point and, accordingly, as a heat resistant resin for the present invention. Furthermore, the resulting aromatic polyamide had a logarithmic viscosity $\eta$inh of 2.5 dl/g.

N-methyl-2-pyrrolidone was added to the resulting aromatic polyamide resin solution and subjected to primary dispersion in a stirring machine whereas N-methyl-2-pyrrolidone was added to alumina particles (average particle di-

ameter 0.4 μm) and subjected to primary dispersion in a stirring machine. The two dispersion liquids having undergone primary dispersion were combined and mixed in such a manner that the aromatic polyamide resin accounted for 10 parts by mass while the alumina particles accounted for 90 parts by mass relative to the sum of the aromatic polyamide resin and alumina particles, which accounted for 100 parts by mass, and additional N-methyl-2-pyrrolidone was added to adjust the solid content to 24 mass%. The mixed solution was further subjected to primary dispersion in a stirring machine. The primary dispersion liquid prepared was further dispersed in a bead mill. Beads of zirconia-reinforced alumina with a diameter of 0.5 mm were used to perform dispersion twice at a circumferential speed of 6 m/s and subsequently perform dispersion twice at a circumferential speed of 10 m/s to prepare a secondary dispersion liquid.

The resulting secondary dispersion liquid was spread over both surfaces of a polyethylene porous base (both surfaces altogether having a total thickness of 5 μm and a permeability of 120 seconds/100 $cm^3$) by a dip coater, subsequently immersed in a water tank, and dried to ensure volatilization of the solvent contained to form a porous layer, thereby providing a porous film according to the present invention. Results of characteristics measurement of the resulting porous film are shown in Table 1.

(Example 2)

Beads of zirconia-reinforced alumina with a diameter of 0.5 mm were used to perform dispersion once at a circumferential speed of 6 m/s, perform dispersion once at a circumferential speed of 8 m/s, and then perform dispersion twice at a circumferential speed of 10 m/s to prepare a secondary dispersion liquid. Except for this, the same procedure as in Example 1 was carried out to produce a porous film according to the present invention.

(Example 3)

Except that the total film thickness of the porous layers present on both sides was 1 μm, the same procedure as in Example 1 was carried out to produce a porous film according to the present invention.

(Example 4)

Except for using beads of zirconia-reinforced alumina with a diameter of 0.9 mm, the same procedure as in Example 1 was carried out to produce a porous film according to the present invention.

(Example 5)

Beads of zirconia-reinforced alumina with a diameter of 0.5 mm were used to perform dispersion once at a circumferential speed of 6 m/s and then perform dispersion once at a circumferential speed of 8 m/s. Except for this, the same procedure as in Example 1 was carried out to produce a porous film according to the present invention.

(Example 6)

Except that the inorganic particles accounted for 85 parts by mass relative to the total amount of aromatic polyamide resin and alumina particles, which accounted for 100 parts by mass, and that the porous layer had a thickness of 2 μm, the same procedure as in Example 1 was carried out to produce a secondary battery separator according to the present invention.

(Example 7)

Except that the inorganic particles accounted for 92 parts by mass relative to the total amount of aromatic polyamide resin and alumina particles, which accounted for 100 parts by mass, and that the porous layers present on both sides had a total thickness of 2 μm, the same procedure as in Example 1 was carried out to produce a secondary battery separator according to the present invention.

(Comparative example 1)

Beads of zirconia-reinforced alumina with a diameter of 1.2 mm were used to perform dispersion once at a circumferential speed of 6 m/s to prepare a secondary dispersion liquid. Except for this, the same procedure as in Example 1 was carried out to produce a porous film according to the present invention.

(Comparative example 2)

Beads of zirconia-reinforced alumina with a diameter of 0.05 mm were used to perform dispersion once at a circumferential speed of 10 m/s to prepare a secondary dispersion liquid. Except for this, the same procedure as in Example 1 was carried out to produce a porous film according to the present invention.

(Comparative example 3)

Except that the inorganic particles accounted for 99 parts by mass relative to the total amount of aromatic polyamide resin and alumina particles, which accounted for 100 parts by mass, the same procedure as in Comparative example 1 was carried out to produce a porous film according to the present invention.

(Comparative example 4)

Except that the inorganic particles accounted for 50 parts by mass relative to the total amount of aromatic polyamide resin and alumina particles, which accounted for 100 parts by mass, the same procedure as in Comparative example 1 was carried out to produce a porous film according to the present invention.

[Table 1]

| | Thickness of porous layer (μm) | Variation in light transmittance (%) | Degree of area heat shrinkage (%) | Increase in puncture strength (gf) | Permeability (seconds /100 $cm^3$) | Shutdown temperature (°C) | Meltdown temperature (°C) | Variation in discharge capacity retention rate |
|---|---|---|---|---|---|---|---|---|
| Example 1 | 3 | 10 | 15 | 45 | 200 | 139 | 250 or more | ○ |
| Example 2 | 3 | 6 | 10 | 50 | 180 | 139 | 250 or more | ◎ |
| Example 3 | 1 | 8 | 20 | 30 | 160 | 138 | 250 or more | ◎ |
| Example 4 | 3 | 13 | 17 | 35 | 220 | 140 | 250 or more | ○ |
| Example 5 | 3 | 15 | 23 | 32 | 280 | 139 | 250 or more | ○ |
| Example 6 | 2 | 9 | 12 | 60 | 300 | 139 | 250 or more | ◎ |
| Example 7 | 2 | 9 | 22 | 60 | 170 | 139 | 250 or more | ◎ |
| Comparative example 1 | 3 | 25 | 18 | 35 | 240 | 140 | 230 | × |
| Comparative example 2 | 3 | 30 | 25 | 30 | 260 | 140 | 210 | × |
| Comparative example 3 | 3 | 15 | 45 | 10 | 190 | 138 | 180 | ○ |
| Comparative example 4 | 3 | 20 | 10 | 80 | 1500 | 141 | 250 or more | × |

Table 1 shows that in all Examples 1 to 7, a sufficiently high degree of heat shrinkage and good battery characteristics are obtained.

In Comparative examples 1 and 2, on the other hand, the inorganic particles are not dispersed sufficiently in the dispersion liquid and a porous layer that is uniform in the length direction is not formed, failing to achieve good battery characteristics. In Comparative example 3, furthermore, the content of the heat resistant resin is not sufficiently large, resulting in a high degree of area heat shrinkage. In Comparative example 4, the content of the heat resistant resin is so large that a porous layer that is uniform in the length direction is not formed, failing to achieve good battery characteristics.

## Claims

1. A porous film comprising a porous base having a porous layer containing inorganic particles and heat resistant resin at least on one side thereof, the heat resistant resin being either a resin (A) having a melting point of 200°C or more or a resin (B) having no melting point, and **characterized in that** the degree of area heat shrinkage at 140°C is 25% or less and that the variation in light transmittance at a wavelength of 800 nm measured at intervals of 5 m in the length direction is 15% or less.

2. A porous film as set forth in claim 1, wherein the existence of the porous layer serves to increase the puncture strength by 30 gf or more.

3. A porous film as set forth in either claim 1 or 2, wherein the inorganic particles account for 60 mass% or more and 95 mass% or less.

4. A porous film as set forth in any one of claims 1 to 3, wherein the total thickness of the porous layers is 1 μm or more and 6 μm or less.

5. A porous film as set forth in any one of claims 1 to 4, wherein the difference between the shutdown temperature and the meltdown temperature (shutdown temperature - meltdown temperature) is 70°C or more.

6. A secondary battery separator comprising a porous film as set forth in any one of claims 1 to 5.

7. A secondary battery comprising a secondary battery separator as set forth in claim 6.

8. A secondary battery as set forth in claim 7, wherein the volume energy density is 500 Wh/L.

## INTERNATIONAL SEARCH REPORT

International application No. PCT/JP2018/005160

A. CLASSIFICATION OF SUBJECT MATTER
Int.Cl. H01M2/16(2006.01)i, B32B3/10(2006.01)i, B32B27/20(2006.01)i, B32B27/32(2006.01)i, H01M10/058(2010.01)i

According to International Patent Classification (IPC) or to both national classification and IPC

B. FIELDS SEARCHED

Minimum documentation searched (classification system followed by classification symbols)
Int.Cl. H01M2/16, B32B3/10, B32B27/20, B32B27/32, H01M10/058

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2016-139489 A (ASAHI KASEI CORPORATION) 04 August 2016, claims 1-14, paragraphs [0001]-[0011], [0130], [0146]-[0155], examples (Family: none) | 1-8 |
| Y | WO 2016/017440 A1 (SUMITOMO CHEMICAL CO., LTD.) 04 February 2016, paragraphs [0001]-[0016], examples, comparative examples & KR 10-2017-0041690 A & CN 106661245 A | 1-8 |
| A | WO 2010/021248 A1 (TEIJIN LTD.) 25 February 2010 & JP 2010-92881 A & KR 10-2011-0050517 A & US 2011/0143185 A1 & CN 102160211 A | 1-8 |
| A | JP 2004-074301 A (HITACHI CHEMICAL CO., LTD.) 11 March 2004, paragraphs [0014], [0023]-[0026] (Family: none) | 1-8 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 23 March 2018 (23.03.2018) | 03 April 2018 (03.04.2018) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 5183435 B
- JP 2016130027 A
- WO 2007052663 A